# EUROPEAN PATENT SPECIFICATION

(11) **EP 3 340 335 B1**
(45) Date of publication and mention of the grant of the patent: **03.11.2021**
(21) Application number: 17204843.1
(22) Date of filing: 01.12.2017
(51) Int. Cl.: H01M 50/103

(54) **BATTERY CASE**
BATTERIEGEHÄUSE
BOÎTIER DE BATTERIE

(30) Priority: 20.12.2016 JP 2016246342
(43) Date of publication of application: 27.06.2018
(73) Proprietor: Kabushiki Kaisha Yaskawa Denki, Kitakyushu-shi, Fukuoka 806-0004 (JP)
(72) Inventor: NINOMIYA, Shunichiro, Kitakyushu-shi, Aomori 806-0004 (JP); KOJIMA, Kotaro, Kitakyushu-shi, Fukuoka 806-0004 (JP); YAMAMOTO, Kazunori, Kitakyushu-shi, Fukuoka 806-0004 (JP); ITO, Tsuyoshi, Kitakyushu-shi, Fukuoka 806-0004 (JP)
(74) Representative: Viering, Jentschura & Partner mbB Patent- und Rechtsanwälte

(56) References cited:
- EP-A2- 0 940 864
- WO-A1-2014/049926
- US-A1- 2011 253 402
- US-A1- 2012 074 036
- US-A1- 2016 093 935
- US-B2- 9 350 000
- Peter Rhys Lewis ET AL: "MINER'S BACKPACK CASES", FORENSIC MATERIALS ENGINEERING CASE STUDIES, 31 December 2003 (2003-12-31), pages 228-229, XP055468762, ISBN: 978-0-203-48453-1 Retrieved from the Internet: URL:https://www.crcpress.com/Forensic-Mate rials-Engineering-Case-Studies/Lewis-Reyno lds-Gagg-Colin-Gagg/p/book/9780849311826 [retrieved on 2018-04-19]

## Description

### BACKGROUND

### 1. Technical Field

Embodiments of the disclosure relate to a battery case and a robot.

### 2. Description of the Related Art

Typically, there has been known a device that operates in explosive atmosphere like a robot for painting. A device for explosion protection is one example of such device. The device for explosion protection supplies noncombustible gas such as a nitrogen to an inside of the device to increase an internal pressure, making an atmosphere inside the device non-explosive atmosphere.

There may be a case where the above-described device for explosion protection incorporates a battery that supplies a measurement device such as a sensor with electric power. There has been proposed a technique that houses a battery in an explosion protection case that secures air tightness for reliably placing the battery in non-explosive atmosphere (for example, see JP-A-9-151912).

However, the above-described related art houses a driving device such as a hydraulic motor in the explosion protection case in addition to the battery, and maintainability of the battery is not considered.

An object of one aspect of the embodiment is to provide a battery case that has high maintainability while holding an explosion protection property and a robot that includes this battery case.

### SUMMARY

The essential technical features of the present invention are explicitly defined in the wording of independent claim 1 presently on file. Other technical features of the invention are explicitly defined in the wordings of dependent claims 2-9 on file.

### BRIEF DESCRIPTION OF THE DRAWINGS

Fig. 1 is a perspective view illustrating an outline of a battery case according to an embodiment;
Fig. 2A is a top view of a case portion;
Fig. 2B is a cross-sectional view of the case portion (1);
Fig. 2C is a cross-sectional view of the case portion (2);
Fig. 2D is a back view of the case portion;
Fig. 3A is a top view of an open/close portion;
Fig. 3B is a cross-sectional view of the open/close portion;
Fig. 4A is a top view of a base;
Fig. 4B is a cross-sectional view of the base;
Fig. 4C is a bottom view of the base;
Fig. 4D is a back view of the base;
Fig. 5 is a back view of a battery case;
Fig. 6A is a pattern diagram illustrating a fixation example of the battery case;
Fig. 6B is a pattern diagram illustrating a fixation example of the stacked battery cases;
Fig. 7 is a flowchart showing a procedure for assembly and fixation;
Fig. 8 is a perspective view illustrating a modification of the battery case;
Fig. 9A is a top pattern diagram of a case portion illustrating a modification of ventholes;
Fig. 9B is a side pattern diagram of the case portion illustrating the modification of the ventholes; and
Fig. 10 is a pattern diagram illustrating one example of a robot.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The following describes a battery case and a robot disclosed in the present application in detail with reference to the accompanying drawings. Here, the following embodiment does not limit the technique related to the present disclosure.

While the following embodiment sometimes uses expressions such as "parallel" and "vertical," these expressions do not intend to strictly meet these states. That is, the above-described respective expressions permit a discrepancy regarding production accuracy, installation accuracy, and the like.

The following embodiment describes the case where a battery housed in a battery case is a primary battery that performs only discharge. Meanwhile, the embodiment of the present disclosure may employ a secondary battery that can perform discharge and charge as the battery housed in the battery case. The battery housed in the battery case is not limited a dry battery but may be a battery pack that includes a plurality of electrically connected cells.

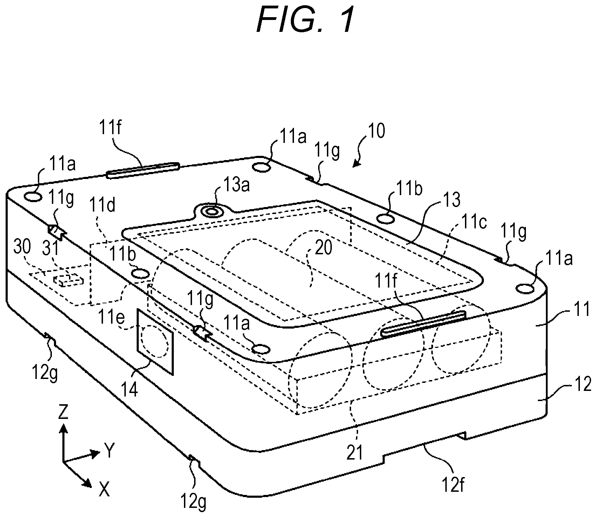

First, the following describes an outline of a battery case 10 according to the embodiment with reference to Fig. 1. Fig. 1 is a drawing illustrating the outline of the battery case 10 according to the embodiment. For easy understanding of the description, Fig. 1 illustrates a three-dimensional Cartesian coordinate system formed of an X-axis, a Y-axis, and a Z-axis. This Cartesian coordinate system may also be illustrated in the other drawings used in the following description.

The battery case 10 includes a plurality of principal surface portions. The principal surface portions are, for example, approximately plate-shaped members forming the battery case 10. The following sometimes describes a principal surface portion where an opening 11c is disposed as a top surface portion among the principal surface portions of the battery case 10. The principal surface portion on the other side of the battery case 10 is sometimes described as an undersurface portion. Among the side surface portions of the battery case 10, side surface portions corresponding to long sides in the top surface portion are sometimes simply described as "side surface portions." A side surface portion on a battery 20 side among the side surface portions corresponding to the short sides in the top surface portion of the battery case 10 is sometimes described as a "front surface portion." Furthermore, a side surface portion on a circuit board 30 side of the battery case 10 is sometimes described as a "back surface portion." The top surface portion of the battery case 10 corresponds to a first principal surface portion. The undersurface portion of the battery case 10 corresponds to a second principal surface portion opposed to the first principal surface portion (the top surface portion).

The battery case 10 (a case portion 11, a base 12, and an open/close portion 13 described later) is made of a resin that has toughness, an insulating property, and a tracking resistance, for example, a polycarbonate. Accordingly, the battery case 10 can excellently electrically protect the batteries 20, the circuit board 30, electronic components 31, and the like, which are housed in the battery case 10. Here, the tracking resistance means a property enduring dielectric breakdown. The battery case 10 preferably has performance of the insulating property and the tracking resistance to the extent of enduring a maximum voltage in an environment where the battery case 10 is installed.

For example, when the battery case 10 is installed at an inside of the robot operating at a voltage of an alternate current 200 V (an effective value), the battery case 10 preferably has the performance enduring the voltage of the alternate current 200 V (the effective value). Here, the above-described resin preferably has transparency in terms of improving visibility inside the battery case 10.

The battery case 10 thus having the transparency facilitates visually perceiving the inside of the battery case 10. In view of this, for example, an exchange work of the battery 20 can be performed safely. With the use of the polycarbonate as the material of the battery case 10, an outer wall of the battery case 10 preferably has a thickness of 1 mm or more.

As illustrated in Fig. 1, the battery case 10, for example, has a flat rectangular parallelepiped shape and houses the batteries 20 as the primary batteries and the circuit board 30 including a circuit to protect the batteries 20 arranged in the top view (viewed in a Z-axis positive direction). That is, the battery case 10 internally has a first region to house the batteries 20 on the X-axis positive direction side. Furthermore, the battery case 10 internally has a second region to house the circuit board 30 on the X-axis negative direction side.

The battery case 10 has an isolation wall 11d extending from the top surface portion to the undersurface portion. This isolation wall 11d isolates the above-described first region from the above-described second region. Accordingly, even the use of a rod-shaped industrial tool when the open/close portion 13 is removed to exchange the battery 20, the above-described isolation wall 11d restrains interference by the industrial tool to the circuit board 30. This ensures restraining damage of the circuit board 30 and the electronic components 31 arranged on the circuit board 30. That is, disposing the isolation wall 11d ensures restraining the damage of the circuit board 30 and the like. The isolation wall 11d is one example of isolation means to isolate the batteries 20 from the circuit board 30.

Note that, the isolation wall 11d does not reach the undersurface portion of the battery case 10. That is, the isolation wall 11d is disposed at the top surface portion of the battery case 10 so as to avoid a contact between the isolation wall 11d and the undersurface portion. In view of this, the first region is communicated with the second region; therefore, airflow can flow between the first region and the second region. That is, the battery case 10 internally forms one continuous space.

In the example illustrated in Fig. 1, the battery case 10 houses the three batteries 20 in a direction along the long sides of the battery case 10. Specifically, a case 21 opening upward is fixed to the inside of the battery case 10. The case 21 has a size with which the plurality of batteries 20 can be arranged and housed. This case 21 holds the respective batteries 20. The case 21 corresponds to a battery holding body.

The battery case 10 has the opening 11c at a position corresponding to the batteries 20 on the top surface portion. The open/close portion 13 to open and close the opening 11c is attachably/detachably mounted to the battery case 10. The opening 11c is a part to exchange the battery 20. The opening 11c has a shape with which the battery 20 is exchangeable. That is, removing the open/close portion 13 can easily exchange the battery 20. Furthermore, mounting the open/close portion 13 ensures easily covering the opening 11c. The opening 11c and the open/close portion 13 are one example of facilitating means that facilitates the exchange work for the battery 20.

A pair of openings 11e is formed at the side surface portions corresponding to the long sides of the battery case 10. These openings 11e are positioned so as to face one another at the above-described side surface portions. The openings 11e are covered with filters 14 with air permeability from outside. For example, the filters 14 are mounted to the side surface portions of the battery case 10 by adhesion from the outside of the battery case 10 to the side surface portions. Thus, the adhesion of the filters 14 to the side surface portions from the outside of the battery case 10 ensures enhancing a strength of the battery case 10 compared with the case where the filters 14 are adhered to the side surface portions from the inside. The opening 11e corresponds to an opening for ventilation. The filter 14 corresponds to a breathable filter.

The filter 14 has protective performance of IP30 or more in the International Protection (IP) standard. That is, the filter 14 has the strength and the air permeability to the extent so as to avoid an entry of the rod-shaped industrial tool and other solid foreign matters with a diameter of 2.5 mm or more into the battery case 10. The filter 14 may be a metallic netlike member or may be a cloth member produced by weaving a chemical fiber.

The openings 11e are preferably formed near positions equally dividing the long sides (the center positions in the X-axis direction). The opening 11e preferably has the diameter of 6.3 mm or more. A total opening area of all of the openings 11e per inner volume 1000 cm³ of the battery case 10 is preferably 1 cm² or more.

Thus, the battery case 10 has the ventholes (the openings 11e and the filters 14 in Fig. 1) on the side surface portions. In view of this, even if explosive gas enters the inside, the battery case 10 can exhaust the entered gas outside. The above-described filters 14 may be omitted. Thus, the battery case 10 is not sealed but purposely includes the ventholes to secure the air permeability of the battery case 10, thereby eliminating the need for a sealing member and the like. This eases the decomposition and the assembly of the battery case 10. That is, disposing the ventholes at the battery case 10 ensures enhancing maintainability while holding an explosion protection property. Such ventholes are one example of retention restraining means that restrains retention of the explosive gas at the inside of the battery case 10.

The respective ventholes are formed at the positions facing one another at the opposed side surface portions. This further ensures enhancing an exhaust effect of the gas. As described above, the inside of the battery case 10 forms the one continuous space. This allows restraining the retention of the explosive gas at the inside.

Continuously, the following describes a configuration of the battery case 10 in further detail. As illustrated in Fig. 1, the battery case 10 includes the case portion 11, the base 12, and the open/close portion 13. Fastening holes 11a are formed at respective four corners on the top surface portion of the battery case 10. A pair of fixing holes 11b is formed at respective intermediate positions along the long sides of the top surface portion. The case portion 11, the base 12, and the open/close portion 13 correspond to a chassis of the battery case 10. The chassis of the battery case 10 houses the batteries 20 and the circuit board 30. The chassis of the battery case 10 includes the plurality of principal surface portions (including the top surface portion, the undersurface portion, and the side surface portions), the open/close portion 13, the first region, the second region, and the isolation wall 11d, which are described above, cutouts 11g, protrusion portions 11f, and recessed portions 12f. The case 21 is disposed inside the chassis.

The case portion 11 and the base 12 are fastened with fasteners such as screws, which are inserted into the fastening holes 11a, thus forming the outer shape of the battery case 10. The battery case 10 is fixed to a mounting target with fasteners such as screws, which are inserted into the fixing holes 11b.

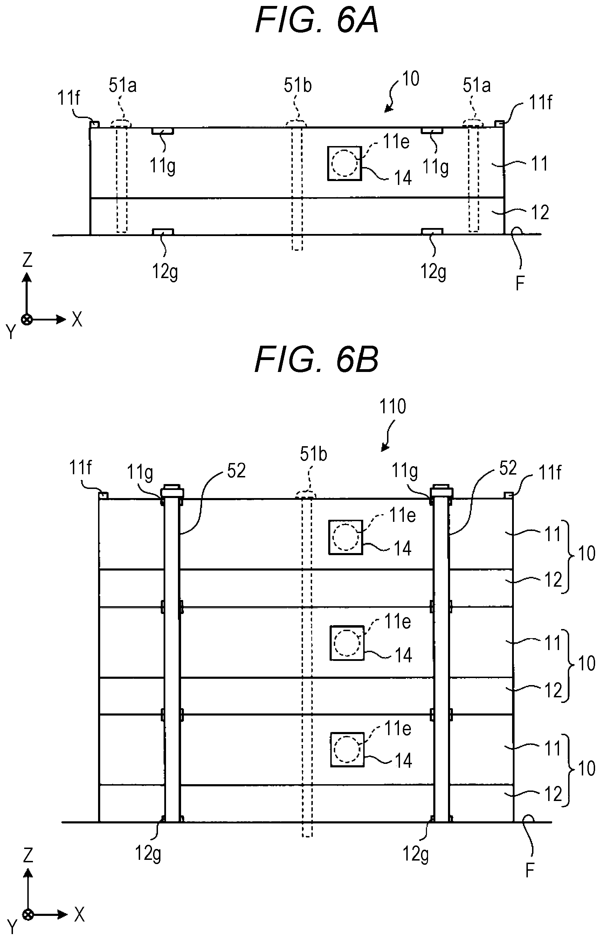

As illustrated in Fig. 1, a total of the four cutouts 11g are formed at positions close to the short sides on the long sides at the outer surface of the top surface portion of the case portion 11. A total of four cutouts 12g are formed at positions corresponding to the cutouts 11g at the outer surface of the undersurface portion of the base 12. The cutouts 11g and the cutouts 12g are also used to stack the battery cases 10. This point will be described later with reference to Fig. 6B and the like.

As illustrated in Fig. 1, the pair of respective protrusion portions 11f is formed at positions close to the short sides at the outer surface of the top surface portion of the case portion 11. The pair of recessed portions 12f is formed at positions corresponding to the protrusion portions 11f at the outer surface of the undersurface portion of the base 12.

The protrusion portions 11f and the recessed portions 12f restrain a displacement of the case portion 11 to the base 12 when the plurality of battery cases 10 is stacked. The open/close portion 13 has a fastening hole 13a. The open/close portion 13 is fastened to the case portion 11 so as to cover the opening 11c on the case portion 11 with a fastener such as a screw, which is inserted into the fastening hole 13a.

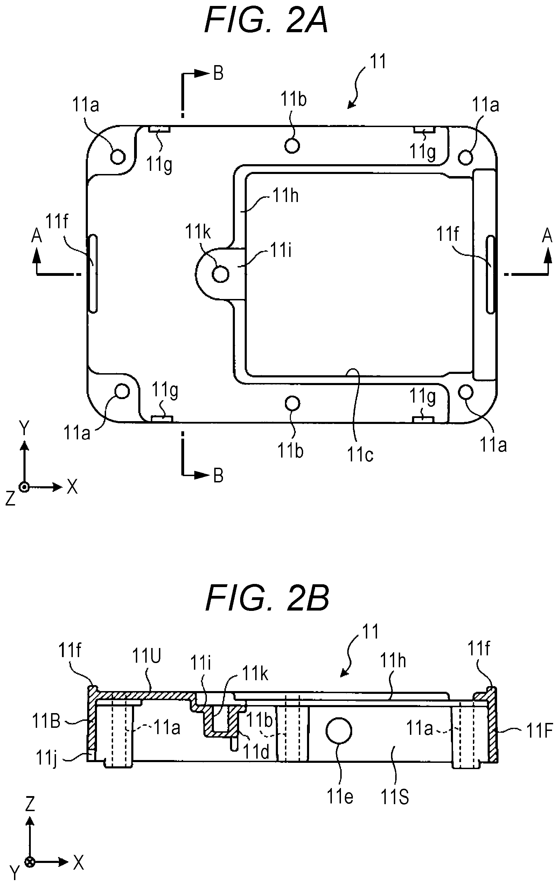

The following describes the detail of the case portion 11 illustrated in Fig. 1 with reference to Figs. 2A to 2D. Fig. 2A is a top view of the case portion 11.

As illustrated in Fig. 2A, the respective fastening holes 11a are formed at the four corners on the top surface portion of the case portion 11. The pair of respective fixing holes 11b is formed near the long sides at the positions equally dividing the long sides (the center positions in the X-axis direction) on the top surface portion of the case portion 11. The opening 11c illustrated in Fig. 1 is formed close to the front surface portion of the case portion 11 (close to the X-axis positive direction). A placement surface 11h to place the open/close portion 13 is disposed at the peripheral area of the opening 11c.

On the outer surface of the top surface portion of the case portion 11, when a height of the portions where the fixing holes 11b are disposed is set as a reference height, the portions where the fastening holes 11a are disposed become lower than the reference height. This is because for configuring heads of the screws inserted into the fastening holes 11a lower than the reference height. The height of the above-described placement surface 11h can be identical to the height at the portions where the fastening holes 11a are disposed.

A recessed portion 11i is disposed close to the back surface portion of the opening 11c, The height of the recessed portion 11i is lower than the placement surface 11h. The recessed portion 11i has a screw hole 11k. The screw hole 11k is formed at a position corresponding to the fastening hole 13a on the open/close portion 13 illustrated in Fig. 1. The screw hole 11k engages the screw portion as the fastening member inserted into the fastening hole 13a.

The respective cutouts 11g are formed close to the front surface portion and close to the back surface portion on the two long sides of the outer surface of the top surface portion of the case portion 11. As illustrated in Fig. 2A, the cutouts 11g are formed at both opposed long sides. Accordingly, the two pairs of cutouts 11g opposed to one another are formed. That is, the total of the four cutouts 11g are formed.

The pair of protrusion portions 11f with the shape extending along the short sides is disposed along the short sides of the outer surface of the top surface portion of the case portion 11. Thus, the protrusion portion 11f has an elongate shape. Accordingly, fitting the protrusion portions 11f to the recessed portions 12f formed on the outer surface of the undersurface portion of the base 12 illustrated in Fig. 1 allows restraining a displacement of the case portion 11 from the base 12 and a change in the relative posture of the case portion 11 and the base 12 around the Z-axis.

The following describes the cross-sectional view of the case portion 11 taken along line A-A illustrated in Fig. 2A with reference to Fig. 2B. Fig. 2B is a cross-sectional view of the case portion 11 (1). Fig. 2B corresponds to a drawing where the case portion 11 taken along line A-A is viewed from the Y-axis negative direction side.

As illustrated in Fig. 2B, the opening 11e is formed on the side surface portion corresponding to the long side in the case portion 11. The opening 11e illustrated in Fig. 2B is the opening 11e formed on the side surface portion in the Y-axis positive direction in Fig. 2A. The opening 11e is also formed at the identical position on the side surface portion in the Y-axis negative direction in Fig. 2A.

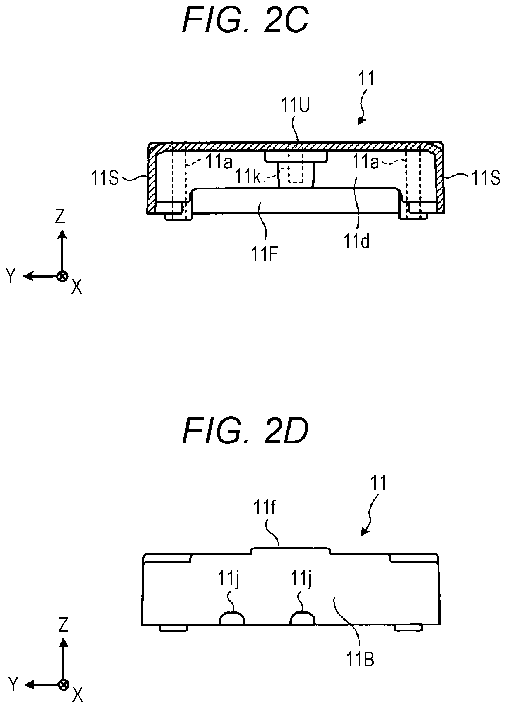

Fig. 2B illustrates a top surface wall 11U corresponding to the top surface portion of the case portion 11, a front surface wall 11F corresponding to the front surface portion of the case portion 11, a back surface wall 11B corresponding to the back surface portion of the case portion 11, and side walls 11S corresponding to the side surface portion of the case portion 11 for reference. The top surface wall 11U, the front surface wall 11F, the back surface wall 11B, and the two side walls 11S form a tubular shape whose undersurface side is open. The back surface wall 11B has a semicircular hole 11j. This point will be described later in detail with reference to Fig. 2D.

As illustrated in Fig. 2B, the screw hole 11k is surrounded by a portion projecting from the top surface wall 11U downward so as not to penetrate the inside of the case portion 11. Here, the portion surrounding the screw hole 11k constitutes a part of the isolation wall 11d illustrated in Fig. 1. This configuration ensures enhancing the strength of the isolation wall 11d.

The following describes the cross-sectional view of the case portion 11 taken along line B-B illustrated in Fig. 2A with reference to Fig. 2C. Fig. 2C is a cross-sectional view of the case portion 11 (2). Fig. 2C corresponds to a drawing viewing the case portion 11 taken along line B-B from the X-axis negative direction side.

As illustrated in Fig. 2C, both ends of the top surface wall 11U are integrated to the respective side walls 11S. Both ends of the isolation wall 11d are connected to the respective side walls 11S, Meanwhile, a lower end of the isolation wall 11d has a center part recessed to the top surface wall 11U side. Accordingly, in Fig. 2C, the front surface wall 11F is viewed beyond the isolation wall 11d. That is, the isolation wall 11d does not partition the space in the case portion 11. Accordingly, the isolation wall 11d does not dam the flow of the airflow in a direction along the X-axis direction.

Fig. 2C illustrates the isolation wall 11d with the recessed lower end as an example. Meanwhile, the shape of the lower end of the isolation wall 11d is not limited to this. The lower end may have a flat shape where the recessed portion is omitted or may have a shape including an inclination not parallel to the Y-axis.

The following describes the shape of the back surface portion in the case portion 11 with reference to Fig. 2D. Fig. 2D is a back view of the case portion 11. Fig. 2D corresponds to a drawing viewing the case portion 11 illustrated in Fig. 2A from the X-axis negative direction side.

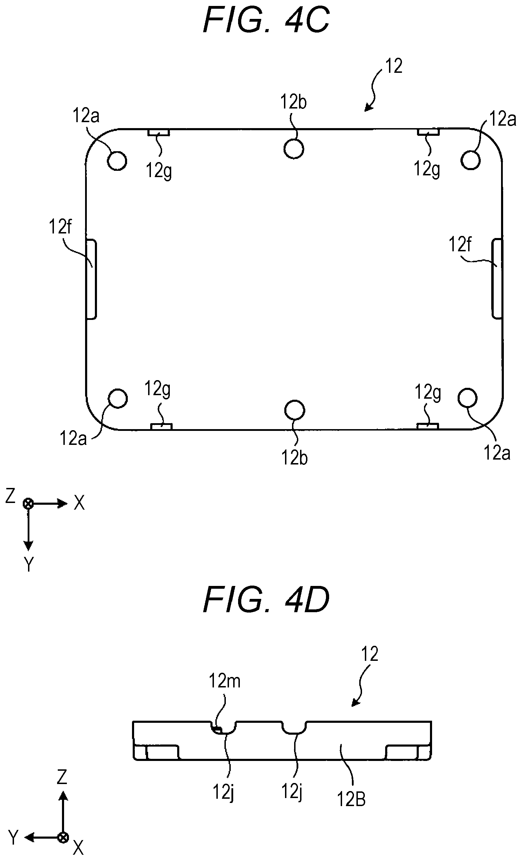

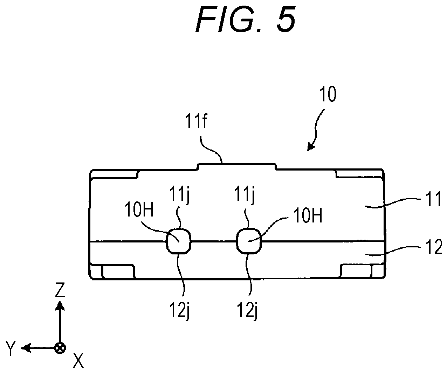

As illustrated in Fig. 2D, the protrusion portion 11f is formed at the center part on the outer surface of the top surface portion in the case portion 11. The two semicircular-shaped semicircular holes 11j are formed on the lower end of the back surface wall 11B. The semicircular holes 11j are opposed to semicircular holes 12j (see Fig. 4D), which will be described later, of the base 12 to form code holes 10H (see Fig. 5), which cause power supply cords connected to the circuit board 30 to pass through.

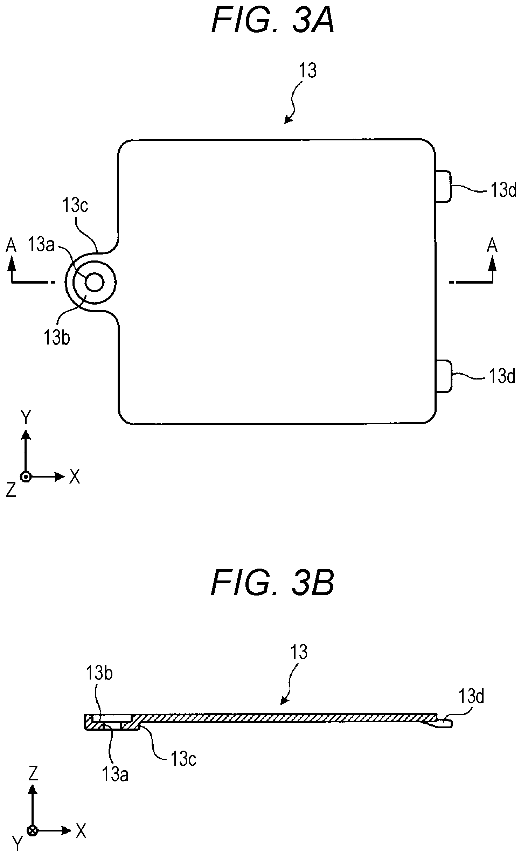

The following describes the open/close portion 13 illustrated in Fig. 1 in detail with reference to Figs. 3A and 3B. Fig. 3A is a top view of the open/close portion 13, and Fig. 3B is a cross-sectional view of the open/close portion 13. Fig. 3B corresponds to the drawing viewing the open/close portion 13 taken along line A-A from the Y-axis negative direction side. The open/close portion 13 corresponds to a cover covering the opening 11c (see Fig. 1) on the case portion 11. The open/close portion 13 is also made of the material identical to the case portion 11 and the base 12.

As illustrated in Fig. 3A, the open/close portion 13 has an approximately rectangular shape. A pair of tongue portions 13d is disposed on the undersurface portion side of a side on the X-axis positive direction side of the open/close portion 13. Meanwhile, a projection 13c projecting to the X-axis negative direction side is disposed at the center part on the side on the X-axis negative direction side of the open/close portion 13. A counter boring 13b lower than the nearby portion and having the fastening hole 13a is formed on the top surface of the projection 13c.

As illustrated in Fig. 3B, the undersurface of the projection 13c projects to the Z-axis negative direction side. The projection 13c has a shape fitting to the recessed portion 11i illustrated in Figs. 2A and 2B. To mount the open/close portion 13 to the case portion 11, the tongue portions 13d are inserted into the back side of the top surface wall 11U (see Fig. 2B) of the case portion 11. With this state, the open/close portion 13 is laid low until the projection 13c is fitted to the recessed portion 11i. The open/close portion 13 is fixed to the case portion 11 with the screw inserted into the fastening hole 13a. The counter boring 13b stores the head of the screw.

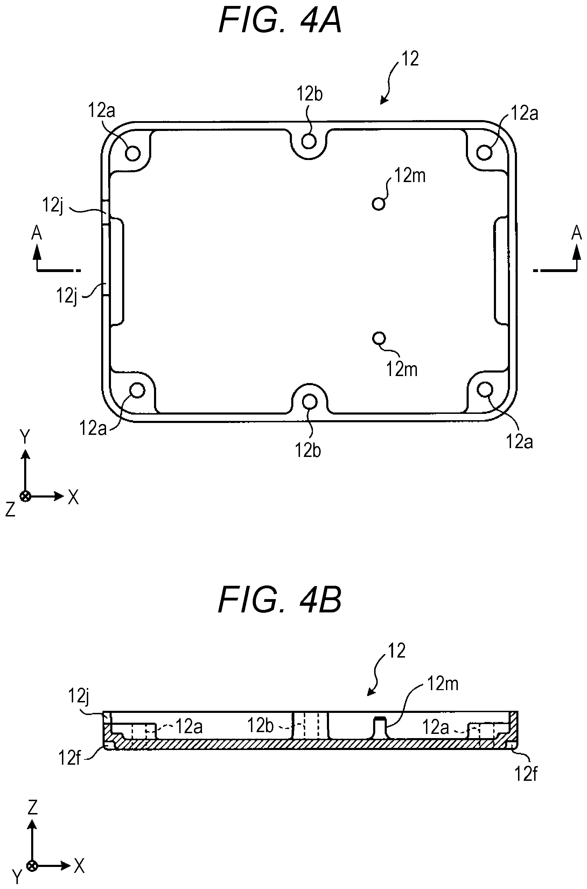

The following describes the base 12 illustrated in Fig. 1 in detail with reference to Figs. 4A to 4D. Fig. 4A is a top view of the base 12.

As illustrated in Fig. 4A, fastening holes 12a are formed at the respective four corners on the inner surface of the undersurface portion in the base 12. The pair of respective fixing holes 12b is formed near the long sides at the positions equally dividing the long sides (the center positions in the X-axis direction) on the inner surface of the undersurface portion in the base 12. The portions where the fastening holes 12a are formed are higher than the inner surface of the undersurface portion. The portions of the undersurface where the fastening holes 11a, which are illustrated in Fig. 2B, of the case portion 11 are formed contact these portions on the top surface.

A pair of supporters 12m, which support the case 21 illustrated in Fig. 1, is formed on the inner surface of the undersurface portion in the base 12. The pair of supporters 12m is disposed at positions symmetrical with respect to line A-A illustrated in Fig. 4A. The semicircular holes 12j are formed at the back surface portion in the base 12. This point will be described later in detail with reference to Fig. 4D.

The following describes the cross-sectional view of the base 12 taken along line A-A illustrated in Fig. 4A with reference to Fig. 4B. Fig. 4B is a cross-sectional view of the base 12. Fig. 4B corresponds to a drawing viewing the base 12 taken along line A-A from the Y-axis negative direction side.

As illustrated in Fig. 4B, the base 12 has a low profile tubular shape whose top surface side is open. The above-described supporters 12m are formed so as to fit within the tube. The recessed portions 12f are formed on the front surface end and the back surface end of the outer surface of the undersurface portion in the base 12. The recessed portions 12f are disposed at positions corresponding to the protrusion portions 11f of the case portion 11 illustrated in Fig. 2B. The semicircular holes 12j are formed at the back surface portion in the base 12.

The following describes the shape of the undersurface portion (the outer surface of the undersurface portion) in the base 12 with reference to Fig. 4C. Fig. 4C is a bottom view of the base 12. Fig. 4C corresponds to a drawing viewing the base 12 illustrated in Fig. 4A from the Z-axis negative direction side.

As illustrated in Fig. 4C, the fastening holes 12a and the fixing holes 12b reach up to the outer surface of the undersurface portion. Here, it is unnecessary that the fastening holes 12a reach up to the outer surface of the undersurface portion. This is because the fastening holes 12a are the holes used for fastening of the case portion 11 (see Fig. 1) and the base 12. The peripheral surface of the fastening hole 12a is formed into a screw shape.

The above-described respective recessed portions 12f and cutouts 12g are formed at the outer surface of the undersurface portion in the base 12. The respective recessed portions 12f are disposed at the positions corresponding to the protrusion portions 11f of the case portion 11 illustrated in Fig. 2A. The respective cutouts 12g are disposed at the positions corresponding to the cutouts 11g of the case portion 11.

The following describes the shape of the back surface portion in the base 12 with reference to Fig. 4D. Fig. 4D is a back view of the base 12. Fig. 4D corresponds to a drawing viewing the base 12 illustrated in Fig. 4A from the X-axis negative direction side.

As illustrated in Fig. 4D, the two semicircular-shaped semicircular holes 12j are formed on the upper end of a back surface wall 12B in the base 12. The semicircular holes 12j are opposed to the above-described semicircular holes 11j (see Fig. 2D) of the case portion 11 to form the code holes 10H (see Fig. 5), which cause the power supply cords connected to the circuit board 30 to pass through. Fig. 4D illustrates a part of the supporter 12m (see Fig. 4B) viewed from the semicircular hole 12j for reference.

The following describes a state where the case portion 11 and the base 12 are combined with reference to Fig. 5. Fig. 5 is a back view of the battery case 10. As illustrated in Fig. 5, facing the semicircular holes 11j of the case portion 11 and the semicircular holes 12j of the base 12 one another forms the two code holes 10H. A power supply cord for a negative electrode is arranged at one of the code holes 10H. A power supply cord for a positive electrode is arranged at the other code hole 10H.

Here, it does not matter even if a gap is present between the power supply cords and the code holes 10H. Specifically, the gap to the extent so as not to cause the entry of the rod-shaped industrial tool and the other solid foreign matters with the diameter of 2.5 mm or more into the battery case 10 is permitted. This embodiment shows the case where the code holes 10H have a circular shape. The code holes 10H may have another shape such as a square or an ellipse.

The following describes fixation examples of the battery case 10 with reference to Figs. 6A and 6B. Fig. 6A is a pattern diagram illustrating the fixation example of the battery case 10. Fig. 6B is a pattern diagram illustrating the fixation example of the stacked battery cases 10. Figs. 6A and 6B correspond to drawings viewing the battery case 10 illustrated in Fig. 1 from the Y-axis negative direction side. Figs. 6A and 6B illustrate the case where screws are used as fasteners.

First, the following describes the case where the one battery case 10 is fixed to an installation surface F with reference to Fig. 6A. As illustrated in Fig. 6A, the battery case 10 is completed by fastening the case portion 11 and the base 12 with screws 51a. Fixing the battery case 10 to the installation surface F with screws 51b completes the fixation work of the batteries 20.

The following describes the case of fixing a multistage case 110 including the plurality of stacked battery cases 10 to the installation surface F with reference to Fig. 6B. Fig. 6B omits the illustration of the screws 51a, which fasten the case portion 11 and the base 12.

As illustrated in Fig. 6B, in this case, the protrusion portions 11f (see Fig. 2A) of the case portion 11 of the battery case 10 and the recessed portions 12f (see Fig. 4C) of the base 12 of the battery case 10 stacked on the upper part are engaged with one another. Thus, the plurality of battery cases 10 is mutually positioned, thus stacking the plurality of battery cases 10 in multiple stages. Thus, the use of the protrusion portions 11f and the recessed portions 12f ensures easily stacking the plurality of battery cases 10. Stacking the plurality of battery cases 10 allows enhancing space efficiency.

Two cable ties 52 are provided so as to make a circuit of the stacked battery cases 10 and pass through the cutouts 11g (see Fig. 2A) in the case portion 11 on the uppermost stage and the cutouts 12g (see Fig. 4C) in the base 12 on the lowest stage. Tying the stacked battery cases 10 with these two cable ties 52 completes the multistage case 110. Fixing the multistage case 110 to the installation surface F with the screws 51b completes the fixation work of the multistage case 110.

The cable ties 52 are disposed at positions not overlapping the openings 11e and the filters 14. This ensures restraining deterioration of the air permeability of the battery cases 10 caused by the cable ties 52. The cable ties 52 make a circuit of the battery cases 10 so as to be fitted to the cutouts 11g and the cutouts 12g. Accordingly, the cable ties 52 are less likely to be displaced. Therefore, the above-described deterioration of the air permeability caused by the cable ties 52 is even less likely to occur.

As illustrated in Fig. 6A, the cable tie 52 may be used also in the case where the one battery case 10 is fixed to the installation surface F similar to the case illustrated in Fig. 6B. The cable tie 52 may be omitted even in the case where the multistage case 110 including the plurality of stacked battery cases 10 is fixed to the installation surface F as illustrated in Fig. 6B.

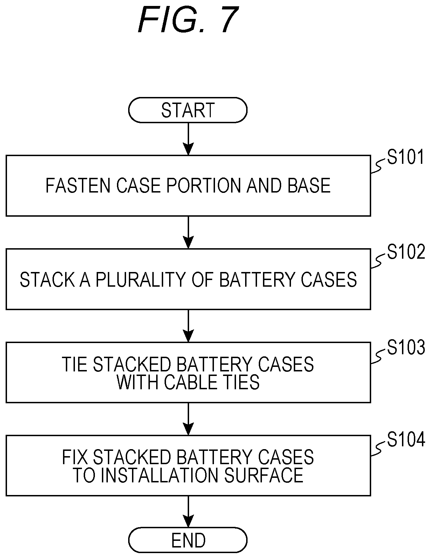

The following describes a procedure for assembly and fixation of the battery case 10 with reference to Fig. 7. Fig. 7 is a flowchart showing the procedure for the assembly and the fixation. Fig. 7 illustrates the procedure for the assembly and the fixation of the multistage case 110 illustrated in Fig. 6B.

As illustrated in Fig. 7, first, fastening the case portion 11 and the base 12 with the screws 51a (see Fig. 6B) (step S101) completes the battery cases 10. The battery cases 10 are prepared for the number of stacked stages.

Next, the plurality of battery cases 10 is stacked (step S102), and the stacked battery cases 10 are tied with the cable ties 52 (see Fig. 6B) (step S103). This completes the multistage case 110. The stacked battery cases 10 (the multistage case 110) are fixed to the installation surface F (see Fig. 6B) with the screws 51b (see Fig. 6B) (step S104).

To fix the one battery case 10 to the installation surface F (see Fig. 6B), the procedures of steps S102 and S103 may be omitted. To remove the battery case 10 from the installation surface F, the screws 51b are removed and then the cable ties 52 are cut.

Only the removal of the open/close portion 13 from the battery case 10 makes the battery 20 in the battery case 10 exchangeable. As illustrated in Fig. 6A, to fix the one battery case 10 to the installation surface F, the battery 20 is exchangeable without the removal of the battery case 10 from the installation surface F.

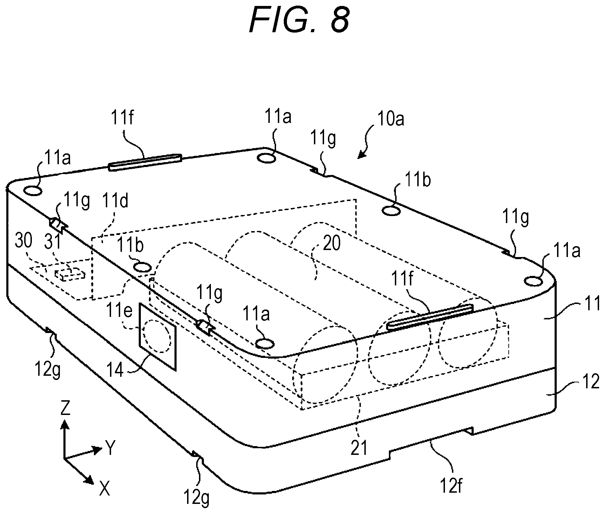

The following describes a battery case 10a according to a modification where the open/close portion 13 (see Fig. 1) is omitted with reference to Fig. 8. In Fig. 8, like reference numerals designate identical elements to Fig. 1, and therefore such elements will not be further elaborated here or the explanation will be given briefly.

As illustrated in Fig. 8, with the battery case 10a according to the modification, the case portion 11 does not include the opening 11c (see Fig. 1). Furthermore, in association with this, the case portion 11 does not include the open/close portion 13 to cover the opening 11c. The other configurations are similar to the battery case 10 illustrated in Fig. 1.

Thus, the battery case according to the one embodiment of the present disclosure may be the battery case 10a where the exchange mechanism for the batteries 20 alone is omitted. If the battery 20 is exchanged, the screws (see the screws 51a in Fig. 6A) to fasten the case portion 11 and the base 12 are removed.

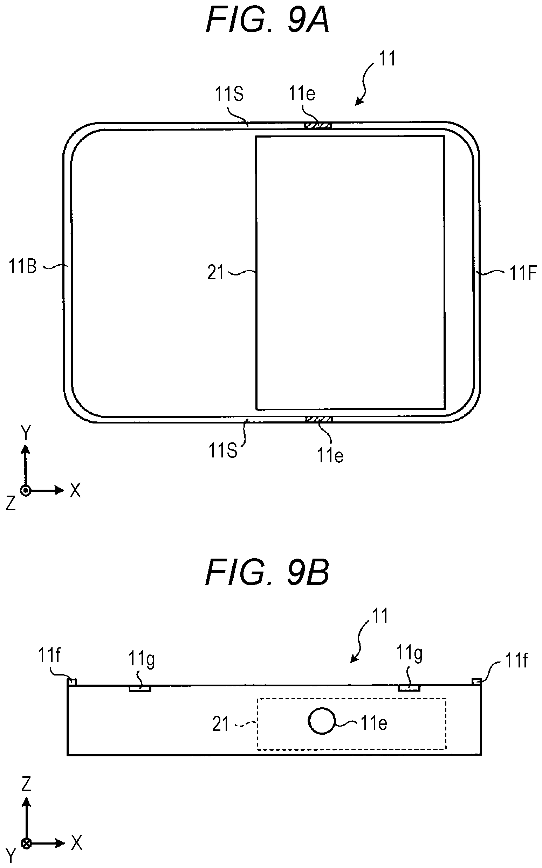

The following describes a modification of the ventholes with reference to Figs. 9A and 9B. Fig. 9A is a top pattern diagram of the case portion 11 illustrating the modification of the ventholes, and Fig. 9B is similarly the side pattern diagram. Fig. 9A omits the illustration of the top surface portion of the case portion 11. In the modification of the ventholes illustrated in Figs. 9A and 9B, the openings 11e and the outer wall of the case 21 correspond to the ventholes. The modification of the ventholes illustrated in Figs. 9A and 9B is also applicable to the battery case 10 illustrated in Fig. 1 and the battery case 10a illustrated in Fig. 8.

As illustrated in Fig. 9A, the case portion 11 according to the modification includes the outer wall of the case 21, which holds the batteries 20, disposed near the side walls 11S where the openings 11e (the hatched parts in Fig. 9A) are disposed. That is, the outer wall of the case 21 is disposed at a predetermined distance from the openings 11e so as to cover the openings 11e. Furthermore, the filters 14 (see Fig. 1) are omitted. Here, the distance between the side wall 11S and the outer wall of the case 21 is preferably small to the extent such that the rod-shaped industrial tool and the other solid foreign matters with the diameter of 2.5 mm or more avoid this outer wall and do not enter the inside of the case portion 11. That is, the protective performance of IP30 or more is preferably secured.

As illustrated in Fig. 9B, the outer walls of the case 21 on the side wall 11S side are arranged, for example, so as to cover the openings 11e in the Y-axis direction view. This configuration ensures that the above-described industrial tool avoids the outer wall of the case 21 and the entrance of the industrial tool into the battery case 10 is excellently restrained.

Figs. 9A and 9B describe the case where the outer walls of the case 21 are disposed close to the openings 11e. Meanwhile, the modification to restrain the entry of the industrial tool and the like into the battery case 10 is not limited to this. For example, a wall extending from the top surface portion of the case portion 11 downward may be disposed, and this wall may restrain the entry of the industrial tool. A width of this wall (a length along the X-axis) is preferably larger than the width of the opening 11e.

Parts that have portions away from the side walls may be mounted to positions corresponding to the openings 11e inside the side walls in the case portion 11. That is, a size of the walls facing the openings 11e and a distance between these walls and the side walls 11S may be adjusted so as to secure the protective performance of IP30 or more.

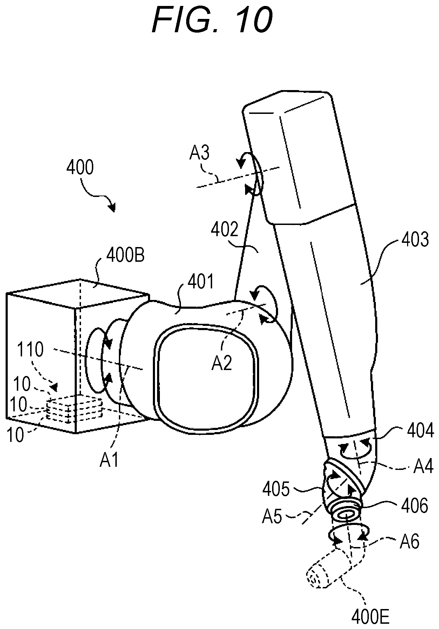

The following describes one example of a robot 400 incorporating the battery case 10 with reference to Fig. 10. Fig. 10 is a pattern diagram illustrating one example of the robot 400. Fig. 10 describes the case where the above-mentioned battery case 10 is applied to the robot 400 for paining, which is one kind of a device for explosion protection. The device for explosion protection to which the battery case 10 is applied is not limited to the robot 400 illustrated in Fig. 10. The device for explosion protection to which the battery case 10 is applied may be various devices including a controller, a distributing board, a handling robot, a conveyance system, and the like.

Fig. 10 omits the illustration of the power supply cord led from the battery case 10 in terms of avoiding a complicated drawing. This power supply cord is connected to a measurement device such as an encoder in an actuator (not illustrated) incorporated into the robot 400 to supply the measurement device with electric power.

In the example illustrated in Fig. 10, the atmosphere inside the robot 400 corresponds to "non-explosive atmosphere." The atmosphere outside the robot 400 corresponds to "the explosive atmosphere."

The following first describes the robot 400. The robot 400 is a six-axis robot and has six rotation axes, a first axis A1, a second axis A2, a third axis A3, a fourth axis A4, a fifth axis A5, and a sixth axis A6.

The robot 400 includes joints corresponding to the respective axes. The robot 400 turns or rotates respective arms by an actuator (not illustrated), which drives the respective joints, to change a posture of each arm. The six-axis robot illustrated in Fig. 10 is one example of the robot 400. The robot 400 may be a robot whose number of axes is other than six axes.

The robot 400 includes a robot base 400B, a first arm 401, a second arm 402, a third arm 403, a fourth arm 404, a fifth arm 405, and a sixth arm 406 from the base end side to the tip side.

To the robot 400, a hose (not illustrated) to supply the noncombustible gas such as a nitrogen to the inside is connected. The introduction of such noncombustible gas turns the inside of the robot 400 into a positive pressure. In view of this, the flowing of the inflammable gas into the robot 400 can be restrained. A circulation of the introduced gas in the robot 400 generates airflow.

The robot base 400B is fixed to another member such as an outer wall of a paint booth (not illustrated). Here, as illustrated in Fig. 10, the robot base 400B has a rectangular parallelepiped shape. Among the six surfaces of the robot base 400B, any of five surfaces other than a surface on which the first arm 401 is disposed can be fixed to an installation surface on the above-described other member. That is, this robot base 400B allows the robot 400 to be freely disposed to another member.

The battery case 10, for example, is fixed to an inner floor surface of the robot base 400B. Fig. 10 illustrates the multistage case 110 including the three stacked battery cases 10 as an example. Meanwhile, the number of battery cases 10 can be any given number of 1 or more. In the example illustrated in Fig. 10, the one battery case 10 supplies the measurement devices corresponding to the two axes with electric power. That is, the three battery cases 10 supply the measurement devices corresponding to the six axes with the electric power.

As described above, the airflow is present at the inside of the robot 400. In view of this, even if the explosive gas enters the insides of the robot 400 and the battery case 10 temporarily, the gas that has entered is promptly discharged to the outside of the battery case 10.

The robot base 400B supports the base end side of the first arm 401 such that the first arm 401 is rotatable around the first axis A1. The tip side of the first arm 401 supports the base end side of the second arm 402 such that the second arm 402 is turnable around the second axis A2, which is perpendicular to the first axis A1, The tip side of the second arm 402 supports the base end side of the third arm 403 such that the third arm 403 is turnable around the third axis A3, which is parallel to the second axis A2.

The tip side of the third arm 403 supports the base end side of the fourth arm 404 such that the fourth arm 404 is rotatable around the fourth axis A4, which is perpendicular to the third axis A3. The tip side of the fourth arm 404 supports the base end side of the fifth arm 405 such that the fifth arm 405 is rotatable around the fifth axis A5, which intersects with and is inclined to the fourth axis A4 by a predetermined angle. The tip side of the fifth arm 405 supports the base end side of the sixth arm 406 such that the sixth arm 406 is rotatable around the sixth axis A6, which intersects with and is inclined to the fifth axis A5 by a predetermined angle.

To the sixth arm 406, the arm at the tip of the robot 400, an end effector 400E (indicated by the dashed line in Fig. 10) such as a paint gun is attachable/detachable. Additionally, the robot 400 has an internal space that causes a cable, a tube, and the like connected to the end effector 400E to pass through. Accordingly, these cables and the like can be connected to the end effector 400E without being exposed to the outside.

As mentioned above, the battery case 10 according to the embodiment includes the batteries 20, the circuit board 30, and the chassis (the case portion 11 and the base 12). The circuit board 30 includes the circuit to protect the batteries 20. The chassis houses the batteries 20 as the primary batteries and the circuit board 30. The chassis has the ventholes (the openings 11e) to cause the gas to pass through.

Thus, the ventholes (the openings 11e) are disposed on the chassis of the battery case 10. Since this allows enhancing the air permeability of the battery case 10, the sealing member for sealing and the like become unnecessary. Accordingly, the battery case 10 ensures enhancing the maintainability while holding the explosion protection property.

The robot 400 according to the embodiment includes the robot base 400B and the arms 401 to 406. The robot base 400B internally includes the battery case 10. Thus, the robot 400 internally includes the battery case 10. In view of this, even if the robot 400 operates in the explosive atmosphere, the maintainability of the batteries can be enhanced while holding the explosion protection property.

The above-mentioned embodiment describes the case where the batteries 20 and the circuit board 30 are housed in the battery case 10 arranged in the top view. Instead of this, the circuit board 30 may be housed on the lower side of the batteries 20. In this case, the above-described isolation wall 11d may be disposed between the circuit board 30 and the batteries 20. Alternatively, the case 21 to house the batteries 20 may be used instead of the isolation wall 11d.

The above-mentioned embodiment describes the case where the screws 51a and 51b are used to fasten the plurality of members mutually. Bolt and nuts may be used as the members for fastening.

The above-mentioned embodiment describes the case where the protrusion portions 11f and the recessed portions 12f for stacking are disposed near the short sides of the battery case 10. Instead of this, the positions of the protrusion portions 11f and the recessed portions 12f may be reversed to each other. The protrusion portions 11f and the recessed portions 12f may be disposed close to the long sides of the battery case 10. That is, the recessed portions 12f may be configured to engage the protrusion portions 11f on the chassis of another battery case 10. Furthermore, the protrusion portions 11f may be configured to engage the recessed portions 12f on the chassis of yet another battery case 10. The numbers of the protrusion portions 11f and the recessed portions 12f may be increased and decreased. The cutouts 11g and 12g for the cable ties 52 may be similarly disposed on the short side sides of the battery case 10.

The above-mentioned embodiment describes the case where the height of the tubular part of the case portion 11 is higher than the height of the tubular part of the base 12. Instead of this, the height of the tubular part of the case portion 11 may be lower than the height of the tubular part of the base 12. The open/close portion 13 may be slidably configured. Alternatively, the case 21 housing the batteries 20 may be slidably configured, and the open/close portion 13 may be disposed at the side wall of the front surface portion.

The above-mentioned embodiment describes the case where the openings for ventilation 11e are disposed at the side surface portions close to the front surface portion of the battery case 10. Instead of this, the openings 11e may be disposed at the side surface portions corresponding to the intermediate positions between the front surface portion and the back surface portion of the battery case 10. Alternatively, the openings 11e may be disposed at the side surface portions close to the back surface portion of the battery case 10. Alternatively, the openings 11e may be disposed at the side surface portion and the front surface portion, the side surface portion and the back surface portion, or the front surface portion and the back surface portion of the battery case 10.

While the above-mentioned embodiment describes the case where the two openings for ventilation 11e are disposed, the number of the openings 11e is not limited to two. For example, the openings 11e may be formed also at the front surface portion and/or the back surface portion of the battery case 10. Alternatively, a large number of holes with a diameter smaller than 2.5 mm may be disposed at the battery case 10.

The above-mentioned embodiment describes the case where the battery case 10 is made of the transparent material. Instead of this, for example, only the open/close portion 13 may be made of the transparent material. Alternatively, only the case portion 11 and the open/close portion 13 may be made of the transparent material. As described above, in the case where the height of the tubular part of case portion 11 is configured lower than the height of the tubular part of the base 12, only the open/close portion 13 or only the case portion 11 and the open/close portion 13 may be made of the transparent material as well.

Additional advantages and modifications will readily occur to those skilled in the art. Therefore, the present disclosure in its broader aspects is not limited to the specific details and representative embodiments shown and described herein. Accordingly, various modifications may be made without departing from the spirit or scope of the general inventive concept as defined by the appended claims and their equivalents.

The embodiment of the present disclosure may be the following first to ninth battery cases and first robot.

The first battery case includes a primary battery, a circuit board that includes a circuit to protect the primary battery, and a chassis that houses the primary battery and the circuit board. The chassis has a venthole to cause gas to pass through.

In the second battery case according to the first battery case, the chassis houses the primary battery and the circuit board that are arranged as viewed from a principal surface side. The chassis has an open/close portion at a position corresponding to the primary battery on one principal surface. The open/close portion is configured to open and close an opening with a shape to make the primary battery exchangeable.

In the third battery case according to the second battery case, the chassis has an isolation wall to isolate the first region housing the primary battery from the second region housing the circuit board at the one principal surface.

In the fourth battery case according to the third battery case, the isolation wall does not reach another principal surface and the first region communicates with the second region.

In the fifth battery case according to any one of the second to the fourth battery cases, the one principal surface of the chassis has transparency.

In the sixth battery case according to any one of the first to the fifth battery cases, the chassis is made of a resin having an insulating property and a tracking resistance.

In the seventh battery case according to any one of the first to the sixth battery cases, the ventholes are a total of two openings formed at positions facing one another at opposed side surfaces.

In the eighth battery case according to the seventh battery case, breathable filters that respectively cover the total of the two openings are further provided.

In the ninth battery case according to any one of the first to the eighth battery cases, the chassis has a recessed portion or a protrusion portion on a pair of the principal surfaces. The recessed portion or the protrusion portion each engages the pair of principal surfaces in another chassis.

The first robot includes a robot base, arms, and any one of the first to the ninth battery cases inside the robot base.

## Claims

1. A robot (400) for working in an inflammable atmosphere, wherein noncombustible gas such as a nitrogen is supplied to an inside of the robot (400) to increase the internal pressure making an atmosphere inside the device of non-explosive atmosphere, wherein the introduced gas in the robot (400) generates airflow by mean of gas circulation; wherein
a battery case (10) is placed in the non-explosive atmosphere, the battery case (10) comprising:
a battery (20);
a circuit board (30) that includes a circuit to protect the battery (20);
a chassis (11, 12, 13) that houses the battery (20) and the circuit board (30); and
at least two venthole openings disposed at the chassis (11, 12, 13) to cause gas to pass through,
**characterized in that**
the battery case (10) contains at least two venthole openings placed at respective positions facing one another at opposed side surface portions of the chassis (11, 12, 13).

2. The robot (400) according to claim 1, wherein
the chassis (11, 12, 13)
has a first principal surface portion,
houses the battery (20) and the circuit board (30) that are arranged as viewed from the first principal surface portion side, and
the battery case (10) further includes an open/close portion (13) configured to open and close an opening to exchange the battery (20), the opening disposed at a position corresponding to the battery (20) on the first principal surface portion.

3. The robot (400) according to claim 2, wherein
the chassis (11, 12, 13) has:
a first region that houses the battery (20);
a second region that houses the circuit board (30); and
an isolation wall (11d) disposed at the first principal surface portion to isolate the first region from the second region.

4. The robot (400) according to claim 3, wherein
the chassis (11, 12, 13) further includes a second principal surface portion opposed to the first principal surface portion, and
the isolation wall (11d) is disposed such that a contact between the isolation wall (11d) and the second principal surface portion is avoided and the first region communicates with the second region.

5. The robot (400) according to any one of claims 2 to 4, wherein
the open/close portion (13) has transparency.

6. The robot (400) according to any one of claims 1 to 5, wherein
the chassis (11, 12, 13) is made of a resin having an insulating property and a tracking resistance.

7. The robot (400) according to claim 1, wherein
the ventholes further include breathable filters (14) that cover the respective openings for ventilation (11e).

8. The robot (400) according to claim 1, the battery case (10) further comprising
a battery holding body (21) disposed inside the chassis (11, 12, 13) to hold the battery (20), wherein
the ventholes further include outer walls of the battery holding body (21), the outer walls being disposed at a predetermined distance from the openings for ventilation (11c) to cover the openings for ventilation (11e).

9. The robot (400) according to any one of claims 1 to 8, wherein
the chassis (11, 12, 13) has a recessed portion (11 i) and a protrusion portion (11f),
the recessed portion (11i) is configured to engage the protrusion portion (11f) on the chassis (11, 12, 13) of another battery case (10), and
the protrusion portion (11t) is configured to engage the recessed portion (11i) on the chassis (11, 12, 13) of yet another battery case (10).

10. The robot (400) according to any one of claims 1 to 9, wherein
the chassis (11, 12, 13) further has cutouts (11g, 12g) to cause a cable tie (52) to pass through.

## Patentansprüche

1. Roboter (400) zum Arbeiten in einem entflammbaren Milieu, wobei ein nicht-brennbares Gas, wie beispielsweise ein Stickstoff, einem Inneren des Roboters (400) zugeführt wird, um den Innendruck zu erhöhen, wobei ein Milieu im Inneren der Vorrichtung aus einem nicht-explosiven Milieu hergestellt wird, wobei das in den Roboter (400) eingeleitete Gas mittels Gaszirkulation eine Luftströmung erzeugt, wobei
ein Batteriegehäuse (10) in dem nicht-explosiven Milieu angeordnet ist, wobei das Batteriegehäuse (10) aufweist:
eine Batterie (20),
eine Schaltungsplatine (30), welche eine Schaltung zum Schutz der Batterie (20) aufweist,
ein Gehäuse (11, 12, 13), welches die Batterie (20) und die Schaltungsplatine (30) beherbergt,
und
mindestens zwei Lüftungslöcher, welche an dem Gehäuse (11, 12, 13) angeordnet sind, um das Gas hindurchströmen zu lassen,
**dadurch gekennzeichnet, dass**:
das Batteriegehäuse (10) mindestens zwei Lüftungslöcher aufweist, welche an jeweils zugeordneten Positionen, welche einander zugewandt sind, an gegenüberliegenden Seitenflächenabschnitten des Gehäuses (11, 12, 13) platziert sind.

2. Roboter (400) gemäß Anspruch 1, wobei:
das Gehäuse (11, 12, 13)
einen Erste-Hauptfläche-Abschnitt aufweist, und
die Batterie (20) und die Schaltungsplatine (30) beherbergt, welche von der Erste-Hauptfläche-Abschnitt-Seite aus gesehen angeordnet sind, und
das Batteriegehäuse (10) ferner einen Öffnen/Schließen-Abschnitt (13) aufweist, welcher konfiguriert ist, um eine Öffnung zu öffnen und zu schließen, um die Batterie (20) auszutauschen, wobei die Öffnung an einer Position, welche mit der Batterie (20) korrespondiert, an dem Erste-Hauptfläche-Abschnitt angeordnet ist.

3. Roboter (400) gemäß Anspruch 2, wobei das Gehäuse (11, 12, 13) aufweist:
einen ersten Bereich, welcher die Batterie (20) beherbergt,
einen zweiten Bereich, welcher die Schaltungsplatine (30) beherbergt, und
eine Trennwand (11d), welche an dem Erste-Hauptfläche-Abschnitt angeordnet ist, um den ersten Bereich von dem zweiten Bereich zu trennen.

4. Roboter (400) gemäß Anspruch 3, wobei:
das Gehäuse (11, 12, 13) ferner einen Zweite-Hauptfläche-Abschnitt aufweist, welcher dem Erste-Hauptfläche-Abschnitt gegenüberliegt, und
die Trennwand (lld) derart angeordnet ist, dass ein Kontakt zwischen der Trennwand (lld) und dem Zweite-Hauptfläche-Abschnitt vermieden wird und der erste Bereich mit dem zweiten Bereich in Verbindung steht.

5. Roboter (400) gemäß einem der Ansprüche 2 bis 4, wobei der Öffnen/Schließen-Abschnitt (13) Transparenz aufweist.

6. Roboter (400) gemäß einem der Ansprüche 1 bis 5, wobei das Gehäuse (11, 12, 13) aus einem Harz hergestellt ist, welches eine isolierende Eigenschaft und eine Kriechstromfestigkeit aufweist.

7. Roboter (400) gemäß Anspruch 1, wobei die Lüftungslöcher ferner atmungsaktive Filter (14) aufweisen, welche die jeweils zugeordneten Ventilationsöffnungen (11e) bedecken.

8. Roboter (400) gemäß Anspruch 1, wobei das Batteriegehäuse (10) ferner aufweist:
einen Batteriehaltekörper (21), welcher im Inneren des Gehäuses (11, 12, 13) angeordnet ist, um die Batterie (20) zu halten, wobei
die Lüftungslöcher ferner Außenwände des Batteriehaltekörpers (21) aufweisen, wobei die Außenwände in einem vorbestimmten Abstand von den Ventilationsöffnungen (11c) angeordnet sind, um die Ventilationsöffnungen (11e) zu bedecken.

9. Roboter (400) gemäß einem der Ansprüche 1 bis 8, wobei:
das Gehäuse (11, 12, 13) einen vertieften Abschnitt (11i) und einen Vorsprungsabschnitt (llf) hat,
der vertiefte Abschnitt (11i) konfiguriert ist, um mit dem Vorsprungsabschnitt (11f) an einem Gehäuse (11, 12, 13) eines anderen Batteriegehäuses (10) in Eingriff zukommen, und
der Vorsprungsabschnitt (11f) konfiguriert ist, um mit dem vertieften Abschnitt (11i) an dem Gehäuse (11, 12, 13) eines noch anderen Batteriegehäuses (10) in Eingriff zu kommen.

10. Roboter (400) gemäß einem der Ansprüche 1 bis 9, wobei:
das Gehäuse (11, 12, 13) ferner Ausnehmungen (11g, 12g) hat, um einen Kabelbinder (52) hindurchgehen zu lassen.

## Revendications

1. Robot (400) destiné à fonctionner dans une atmosphère inflammable, dans lequel un gaz ininflammable tel qu'un azote est fourni à un intérieur du robot (400) pour augmenter la pression interne, une atmosphère à l'intérieur du dispositif état constituée d'atmosphère non-explosive, dans lequel le gaz introduit dans le robot (400) génère un flux d'air au moyen d'une circulation de gaz ; dans lequel
un boîtier de batterie (10) est placé dans l'atmosphère non-explosive, le boîtier de batterie (10) comprenant :
une batterie (20) ;
une carte de circuit (30) qui comprend un circuit pour protéger la batterie (20) ;
une enceinte (11, 12, 13) qui abrite la batterie (20) et la carte de circuit (30) ; et
au moins deux ouvertures d'évent disposées au niveau de l'enceinte (11, 12, 13) pour provoquer le passage de gaz,
**caractérisé en ce que**
le boîtier de batterie (10) contient au moins deux ouvertures d'évent placées à des positions respectives faisant face l'une à l'autre sur des parties de surface latérale opposées de l'enceinte (11, 12, 13).

2. Robot (400) selon la revendication 1, dans lequel :
ladite enceinte (11, 12, 13)
présente une partie de première surface principale,
abrite la batterie (20) et la carte de circuit (30), qui sont disposées comme vues du côté de partie de première surface principale, et
ledit boîtier de batterie (10) comprend en outre une partie d'ouverture/fermeture (13) configurée pour ouvrir et fermer une ouverture pour remplacer la batterie (20), ladite ouverture étant disposée à une position correspondant à la batterie (20) sur la partie de première surface principale.

3. Robot (400) selon la revendication 2, dans lequel
ladite enceinte (11, 12, 13) comprend :
une première région abritant la batterie (20),
une deuxième région abritant la carte de circuit (30), et
une paroi d'isolation (lld) disposée au niveau de la partie de première surface principale pour isoler la première région de la deuxième région.

4. Robot (400) selon la revendication 3, dans lequel :
ladite enceinte (11, 12, 13) comprend en outre une partie de deuxième surface principale opposée à la partie de première surface principale, et
la paroi d'isolation (lld) est disposée de telle sorte qu'un contact entre la paroi d'isolation (lld) et la partie de deuxième surface principale est évité et la première région est en communication avec la deuxième région.

5. Robot (400) selon l'une quelconque des revendications 2 à 4, dans lequel
la partie d'ouverture/fermeture (13) comprend de la transparence.

6. Robot (400) selon l'une quelconque des revendications 1 à 5, dans lequel
ladite enceinte (11, 12, 13) est réalisée en une résine ayant une propriété isolante et une résistance au cheminement.

7. Robot (400) selon la revendication 1, dans lequel
les évents comprennent en outre des filtres perméables à l'air (14) recouvrant les ouvertures respectives de ventilation (11e).

8. Robot (400) selon la revendication 1, dans lequel le boîtier de batterie (10) comprend en outre :
un corps de maintien de batterie (21) disposé à l'intérieur de l'enceinte (11, 12, 13) pour maintenir la batterie (20), dans lequel
les évents comprennent en outre des parois extérieures du corps de maintien de batterie (21), les parois extérieures étant disposées à une distance prédéterminée desdits ouvertures de ventilation (11c) pour recouvrir les ouvertures de ventilation (11e).

9. Robot (400) selon l'une quelconque des revendications 1 à 8, dans lequel :
ladite enceinte (11, 12, 13) présente une partie en creux (11i) et une partie en saillie (11f),
la partie en creux (11i) est configurée pour s'engrener avec la partie en saillie (11f) sur l'enceinte (11, 12, 13) d'un autre boîtier de batterie (10), et
la partie en saillie (11f) est configurée pour s'engrener avec la partie en creux (11i) sur l'enceinte (11, 12, 13) d'encore un autre boîtier de batterie (10).

10. Robot (400) selon l'une quelconque des revendications 1 à 9, dans lequel :
l'enceinte (11, 12, 13) présente en outre des découpures (11g, 12g) pour permettre le passage d'un serre-câble (52).
